# DEMANDE DE BREVET EUROPEEN

(11) **EP 4 625 642 A2**
(43) Date de publication de la demande: **01.10.2025**
(21) Numéro de dépôt: 25166754.9
(22) Date de dépôt: 27.03.2025
(51) Int. Cl.: H01M 50/202, H01M 50/251, H01M 50/271, H01M 50/296, H01M 50/503, H01M 50/543

(54) **MODULE DE BATTERIE POUR UNE UNITÉ DE CONTRÔLE D'UN DISJONCTEUR ÉLECTRIQUE, UNITÉ DE CONTRÔLE ET DISJONCTEUR ÉLECTRIQUE ASSOCIÉS**

(30) Priorité: 28.03.2024 FR 2403191
(71) Demandeur: SCHNEIDER ELECTRIC INDUSTRIES SAS, 92500 Rueil-Malmaison (FR)
(72) Inventeur: BIANCHI, Thomas, 38100 GRENOBLE (FR); PRIEUR, Patrick, 38640 CLAIX (FR); LEVEQUE, Yves, 38500 VOIRON (FR); LICHERE, Jean-Marc, 21121 FONTAINE LES DIJON (FR)
(74) Mandataire: Lavoix

(57) **Abrégé**

Ce module de batterie (200) est configuré pour être inséré dans un logement (201) de batterie débouchant sur une face avant (22) d'une unité de contrôle (20) d'un disjoncteur électrique. Le module de batterie comprend une enveloppe (210) avec une paroi proximale (214), qui est globalement orthogonale à un axe principal (A214), et une paroi périphérique (216), qui s'étend depuis la paroi proximale et présente un contour continu autour de l'axe principal, la paroi proximale et la paroi périphérique délimitant ensemble une cavité (211) de réception d'une pile (212). Le module de batterie comprend un élément conducteur (220B), qui est partiellement reçu dans la cavité et qui est configuré pour être connecté à un pôle de la pile. La paroi proximale et la paroi périphérique forment ensemble une portion continue de l'enveloppe qui s'étend depuis la paroi proximale et selon l'axe principal, jusqu'à une distance minimale (L240) supérieure ou égale à 14 mm.

## Description

La présente invention concerne un module de batterie d'une unité de contrôle d'un disjoncteur électrique. L'invention concerne aussi une unité de contrôle comportant un tel module de batterie, ainsi qu'un disjoncteur électrique comportant une telle unité de contrôle.

On connaît, notamment de EP-0 843 332-A1, des disjoncteurs électriques comportant une unité de coupure et une unité de contrôle électronique. Une telle unité de contrôle est typiquement configurée pour mesurer en temps réel un état de fonctionnement du disjoncteur et pour commander l'ouverture de l'unité de coupure en cas d'un défaut de fonctionnement du disjoncteur. L'unité de contrôle est reçue, de manière réversible, dans un logement ménagé dans l'unité de coupure et est située sur une face avant du disjoncteur, de manière qu'un utilisateur puisse y lire et/ou régler certains paramètres de fonctionnement du disjoncteur électrique. L'unité de contrôle est amovible, de sorte qu'un utilisateur puisse remplacer l'unité de contrôle en cas de disfonctionnement, sans avoir à déconnecter l'unité de coupure du reste de l'installation électrique.

Selon les applications, le disjoncteur opère sous des tensions de plusieurs centaines voire milliers de Volts, et sous des courants allant jusqu'à plusieurs milliers d'Ampères. Le disjoncteur électrique en général, et l'unité de contrôle en particulier, doivent présenter un isolement électrique suffisante pour garantir la sécurité des personnes. Par exemple, la norme IEC 947-1:2019 - tableaux 13 et 15 - définit des classes d'isolement, qui correspondent à des distances minimales à respecter entre les points électrisés - ou susceptibles d'être électrisés - et l'utilisateur. Les distances d'isolement dépendent notamment de la classe d'isolement recherchée, et de la tension électrique sous laquelle le disjoncteur électrique opère. Dans le cadre de la présente description, on considère principalement deux intervalles de tension électrique, avec un premier intervalle correspondant à une tension inférieure ou égale à 690V, et un deuxième intervalle correspondant à une tension strictement supérieure à 690V. Pour une tension supérieure à 690V, la classe 1 d'isolement impose une distance dans l'air supérieure à 7 mm, et des lignes de fuites supérieures à 10 mm. La classe 2 d'isolation double ces distances. Pour une tension inférieure à 690 V, la classe 2 d'isolation demande une distance dans l'air supérieure à 10 mm.

WO-2006/069502-A1, CN-114 094 272-A, US-2004/257035-A1, US-2003/149424-A1 et CN-117 254 146-A décrivent chacun des exemples de modules de batterie n'offrant pas de protection particulière pour ce qui concerne les distances d'isolement.

EP 3 290 935-A1 décrit, par exemple, une unité de contrôle comprenant un boitier réalisé en un matériau isolant, dans lequel sont reçus plusieurs composants, tels qu'une carte électronique, des composants de division de tension, etc. Un module d'alimentation est généralement prévu pour alimenter l'unité de contrôle lorsque le disjoncteur est sous tension. Une batterie est généralement prévue et reçue dans un logement ménagé dans le boitier, notamment pour permettre la sauvegarde des diverses données lors du déclenchement du disjoncteur ou lorsque le disjoncteur n'est pas sous tension.

Or cette batterie doit être changée périodiquement. Avec les disjoncteurs électriques de l'art antérieur, il est nécessaire de démonter l'unité de contrôle de l'unité de coupure, ce qui demande que l'utilisateur ait une habilitation spécifique et d'interrompre le service de l'installation électrique, ce qui fait du remplacement d'une batterie, tâche apparemment simple, une opération lourde et complexe. Ainsi on cherche à pouvoir changer la batterie par l'avant, sans interruption de service, et tout en garantissant la sécurité des personnes.

C'est à ces besoins qu'entend plus particulièrement remédier l'invention, en proposant un module de batterie qui puisse être mis en place par l'avant sur une unité de contrôle, tout en garantissant la protection des personnes.

À cet effet, l'invention concerne un module de batterie pour une unité de contrôle d'un disjoncteur électrique, le module de batterie étant configuré pour être inséré dans un logement de batterie associé de l'unité de contrôle, le logement débouchant sur une face avant de l'unité de contrôle et présentant une forme allongée selon un axe de profondeur orthogonal à la face avant, l'unité de contrôle comprenant deux plages de contact électrique agencées dans un fond du logement, dans lequel :
- le module de batterie comprend :
   - une enveloppe, qui comprend une paroi proximale, qui est globalement orthogonale à un axe principal, et une paroi périphérique, qui s'étend en saillie depuis la paroi proximale et qui présente un contour continu autour de l'axe principal, la paroi proximale et la paroi périphérique délimitant ensemble une cavité de l'enveloppe, la cavité étant configurée pour recevoir une pile électrique présentant deux pôles électriques, la cavité débouchant de l'enveloppe par une embouchure distale, qui est située à l'opposé de la paroi proximale selon l'axe principal,
   - un couvercle, qui est mobile par rapport à l'enveloppe entre une position ouverte et une position fermée, dans laquelle le couvercle obture au moins en partie la cavité, le couvercle en position fermée étant configuré pour maintenir la pile électrique dans la cavité, le module de batterie étant alors dans une configuration fermée,
   - deux éléments conducteurs, qui comprennent chacun une patte d'entrée, qui est configurée pour être connectée à un pôle respectif de la pile, et une patte de sortie, qui est configurée pour être connectée à une plage de contact électrique respective de l'unité de contrôle lorsque le module de batterie est en configuration fermée et est reçu dans le logement correspondant, dans une configuration assemblée du module de batterie à l'unité de contrôle,
- la paroi proximale et la paroi périphérique forment ensemble une portion continue de l'enveloppe, la portion continue s'étendant jusqu'à une distance minimale de la paroi proximale, la distance minimale étant mesurée selon l'axe principal et étant supérieure ou égale à 14 mm.

Grâce à l'invention, on garantit qu'une distance d'isolement de classe 2 selon la norme IEC947-1:2019 est toujours respectée, et ceci quelle que soit la position du module de batterie au cours de son assemblage à l'unité de contrôle, c'est-à-dire tant en configuration assemblée à l'unité de contrôle qu'au cours de l'insertion du module de batterie dans le logement de l'unité de contrôle. Ainsi, même lorsque le logement débouche sur la face avant du module de batterie, le remplacement du module de batterie est possible, par l'avant, c'est-à-dire sans avoir à déplacer le module de batterie par rapport au reste du disjoncteur électrique.

Selon des aspects avantageux mais non obligatoires de l'invention, un tel module de batterie peut incorporer une ou plusieurs des caractéristiques suivantes prises isolément ou selon toute combinaison techniquement admissible :
- Le couvercle est articulé en rotation, par rapport à l'enveloppe, autour d'un axe de charnière, entre la position ouverte et la position fermée.
- Le module de batterie est configuré pour recevoir une pile présentant deux pôles situés sur des faces opposées de la pile,
   alors que les deux éléments conducteurs incluent un premier élément, qui est porté par le couvercle, et un deuxième élément, qui est porté par l'enveloppe, que les pattes de sortie comprennent chacune une portion terminale présentant globalement une forme de lame rectiligne,
   et que, lorsque le module de batterie est en configuration fermée, les deux portions terminales débouchent de la cavité par des passages, qui sont ménagés dans le couvercle, les deux portions terminales s'étendant parallèlement à l'axe principal et étant décalées l'une par rapport à l'autre selon un axe transversal, qui est orthogonal à l'axe principal.
- Lorsque le module de batterie est en configuration fermée, les portions terminales sont géométriquement portées par un même plan de connexion, qui est parallèle à l'axe principal et parallèle à l'axe transversal,
   alors que le couvercle comprend deux extensions, chaque extension étant associée à un passage respectif,
   que chaque extension ménage un conduit, qui s'étend depuis le passage associé parallèlement à l'axe principal lorsque le module de batterie est en configuration fermée, la portion terminale débouchant par le passage considéré étant au moins partiellement reçue dans le conduit associé,
   et que les deux conduits sont ouverts selon une même direction de connexion, la direction de connexion étant orthogonale au plan de connexion, de manière à autoriser une connexion électrique sur chacune des portions terminales selon la direction de connexion.
- Chaque portion terminale comprend une extrémité, les extrémité des portions terminales étant alignées, l'une par rapport à l'autre, selon l'axe transversal, alors que chaque extension présente un ergot, qui s'étend en saillie, depuis le reste de l'extension, au sein du conduit correspondant, chaque ergot étant intercalé entre l'extension et la portion terminale correspondante selon la direction de connexion, chaque ergot prenant appui contre la portion terminale correspondante,
   et que les ergots sont alignés selon l'axe transversal.
- Chaque portion terminale comprend une extrémité présentant un renflement terminal, qui est ménagé en saillie par rapport au reste de la portion terminale correspondante et s'étend selon la direction de connexion, chaque renflement terminal étant configuré pour prendre appui sur la plage de contact associée, alors que chaque extension présente une protubérance terminale, qui est ménagée en saillie par rapport au reste de l'extension correspondante selon la direction de connexion, chaque protubérance terminale étant alignée, selon l'axe principal, avec le renflement terminal de la portion terminale correspondante.

L'invention concerne aussi une unité de contrôle pour un disjoncteur électrique, l'unité de contrôle comprenant :
- un exemplaire du module de batterie tel que défini précédemment, et
- un boitier, qui est réalisé en un matériau isolant et dans lequel est ménagé un logement de réception du module de batterie, le logement étant ménagé en retrait du plan avant et débouchant sur la face avant selon l'axe de profondeur,
dans laquelle :
- l'unité de contrôle comprend deux plages de contact, qui sont agencées dans un fond du logement,
- les deux pattes de sortie sont configurées pour être électriquement connectées à une plage de contact respective lorsque l'unité de contrôle est dans la configuration assemblée.

Avantageusement :
- Le module de batterie est tel que défini précédemment,
   alors que le logement comprend une paroi de fond, dans laquelle sont ménagées des ouvertures, les plages de contact étant situées d'un côté opposé au logement par rapport à la paroi de fond,
   et que, lorsque l'unité de contrôle est dans la configuration assemblée, chaque extension et la portion terminale associée traversent l'ouverture correspondante, la portion terminale étant en appui contre la plage de contact correspondante.
- Les ouvertures présentent un indice de protection IP2x tel que défini dans la norme IEC 60529:2013.
- Le module de batterie est tel que défini précédemment,
   alors que chaque protubérance terminale est configuré pour, au cours d'un mouvement d'insertion du module de batterie dans le logement de batterie, prendre appui sur un contour de l'ouverture correspondante, de manière à guider chaque extension et la portion terminale associée lors du franchissement de l'ouverture et à empêcher que le renflement terminal de la portion terminale considérée ne heurte le contour de l'ouverture.

L'invention concerne aussi un disjoncteur électrique, comprenant :
- une unité de coupure, comprenant au moins un actionneur et un dispositif de coupure déclenchable au moyen l'actionneur,
- un exemplaire de l'unité de contrôle tel que définie précédemment,
dans lequel :
- l'unité de coupure ménage un réceptacle, qui débouche sur une face frontale de l'unité de coupure,
- l'unité de contrôle est reçue dans le réceptacle de l'unité de coupure dans une configuration assemblée du disjoncteur électrique, où l'unité de contrôle est configurée pour contrôler l'actionneur, de manière à déclencher le dispositif de coupure.

L'invention sera mieux comprise, et d'autres avantages de celle-ci apparaîtront plus clairement à la lumière de la description qui va suivre, d'un mode de réalisation d'un module de batterie et d'une unité de contrôle et d'un disjoncteur, conformes à son principe, donnée uniquement à titre d'exemple et faite en référence aux dessins annexés, dans lesquels :
- [Fig 1] la figure 1 représente respectivement, sur deux inserts a) et b), une vue en perspective et une vue en perspective partiellement éclatée d'un disjoncteur électrique conforme à l'invention, le disjoncteur électrique comprenant une unité de contrôle, elle aussi conforme à l'invention ;
- [Fig 2] la figure 2 est une vue en perspective de l'unité de contrôle de la figure 1 ;
- [Fig 3] la figure 3 est une vue en perspective partiellement éclatée de l'unité de contrôle de la figure 1, l'unité de contrôle comprenant un module de batterie conforme à lînvention ;
- [Fig 4] la figure 4 représente respectivement, sur trois inserts a), b) et c), une vue à plus grande échelle de l'unité de contrôle selon la flèche IV à la figure 3, et le module de batterie de la figure 3, le module de batterie étant représenté en perspective et en perspective éclatée sur les inserts b) et c) ;
- [Fig 5] la figure 5 représente, sur deux inserts a) et b), certains éléments du module de batterie de la figure 3 en perspective éclatée et en perspective ;

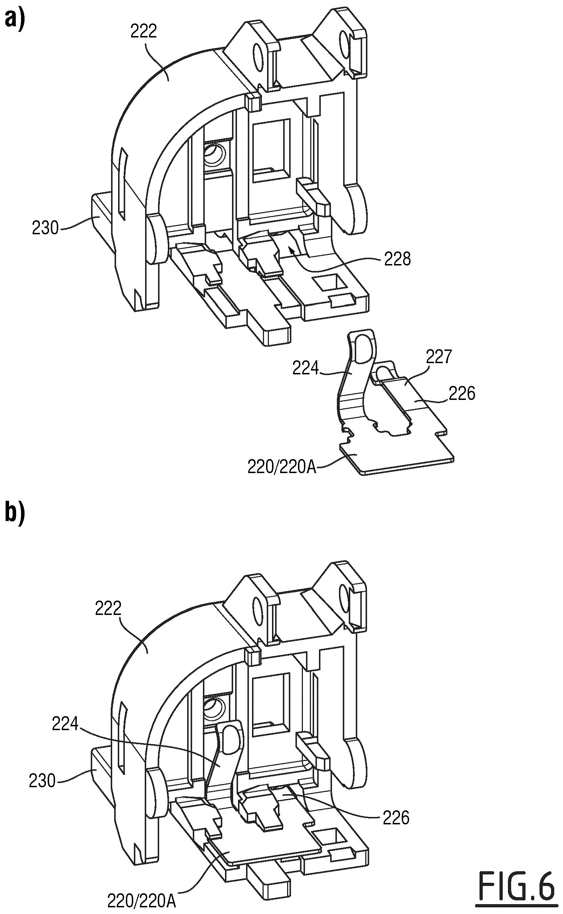

- [Fig 6] la figure 6 représente, sur deux inserts a) et b), certains éléments du module de batterie de la figure 3 en perspective éclatée et en perspective ;
- [Fig 7] la figure 7 représente, sur deux inserts a) et b), une vue en perspective du module de batterie de la figure 3 dans une configuration ouverte, et une vue en perspective d'un couvercle du module de batterie ;
- [Fig 8] la figure 8 représente, sur deux inserts a) et b), une coupe de l'unité de contrôle dans deux configuration intermédiaires successives au cours du montage du module de batterie au reste de l'unité de contrôle ;
- [Fig 9] la figure 9 représente respectivement, sur deux inserts a) et b), une coupe de l'unité de contrôle dans une troisième configuration intermédiaire et dans une configuration assemblée au cours du montage du module de batterie au reste de l'unité de contrôle ;
- [Fig 10] la figure 10 est une vue en perspective d'un détail de l'unité de contrôle en configuration assemblée, certaines pièces étant cachées.

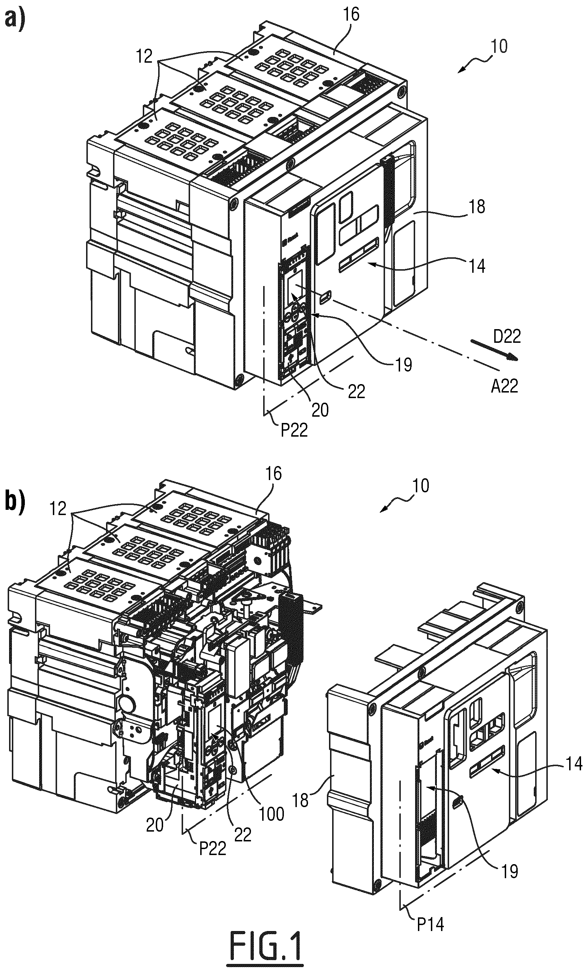

Un disjoncteur électrique 10 est représenté en figure 1. Le disjoncteur électrique 10, dit aussi simplement disjoncteur 10, est ici un disjoncteur multipolaire, en particulier un disjoncteur tripolaire. Le nombre de pôles du disjoncteur 10 n'est pas limitatif. De façon connue, un disjoncteur électrique multipolaire comporte, pour chaque pôle électrique, des terminaux de puissance d'entrée et de sortie, qui sont respectivement raccordés ou isolés électriquement l'un de l'autre par un dispositif de coupure du disjoncteur. Le dispositif de coupure comprend par exemple des contacts mobiles séparables, qui sont reçus dans une chambre de coupure du disjoncteur électrique 10 et qui dont les mouvements sont contrôlés **par un actionneur.** Ainsi, le dispositif de coupure est déclenchable par l'actionneur. Les chambres de coupures sont ici matérialisées par trois grilles 12 visibles sur une face supérieure du disjoncteur 10, les autres éléments du dispositif de coupure n'étant pas représentés.

Le disjoncteur électrique 10 est destiné à être utilisé au sein d'une installation électrique, par exemple pour contrôler l'alimentation d'une machine-outil. Dans une configuration normale d'utilisation, le disjoncteur électrique 10 est généralement placé au sein d'une armoire électrique, le disjoncteur électrique 10 présentant une face frontale 14, qui est orientée vers l'utilisateur se tenant devant l'armoire électrique. L'armoire électrique n'est pas représentée.

Le disjoncteur électrique 10 comprend une unité de coupure 16, qui comporte en particulier chacune des chambres de coupures, ainsi que le dispositif de coupure et l'actionneur associé.

Le disjoncteur électrique 10 comprend avantageusement un plastron 18, qui est démontable de l'unité de coupure 16. Le plastron 18 est réalisé en un matériau électriquement isolant et s'étend globalement selon un plan frontal P14, qui définit une portion de la face frontale 14 du disjoncteur électrique 10, et par extension de l'unité de coupure 16. Le plastron 18 sert ainsi à protéger l'utilisateur du disjoncteur 10. À la figure 1 a), le plastron 18 est représenté assemblé à l'unité de coupure 16, ce qui correspond à une configuration d'utilisation normale du disjoncteur 10. À la figure 1 b), le plastron 18 est éloigné de l'unité de coupure 16, cette configuration se retrouvant par exemple lors d'une maintenance de l'unité de coupure 16

Le disjoncteur électrique 10 comprend aussi une unité de contrôle 20. L'unité de contrôle 20 est configurée pour analyser des états de l'unité de coupure 16 et est configurée pour déclencher l'actionneur en fonction des résultats de ces analyses, séparant ainsi les contacts séparables.

L'unité de contrôle 20 comprenant une face avant 22, La face avant 22 présente une forme globalement plane et est géométriquement portée par un plan avant P22, qui est orthogonal à un axe de profondeur A22 de l'unité de contrôle 20. La face avant 22 est orientée vers l'utilisateur lorsque l'unité de contrôle 20 est dans une configuration normale d'utilisation. La face avant 22 définit ainsi une direction avant D22, qui est parallèle à l'axe de profondeur A22. La direction avant D22 est représentée par une flèche. Les notions de directions telles que « avant », « arrière », « haut », « bas », etc., sont définies en relation aux éléments tels que représentés sur les figures, sachant qu'il peut en être autrement dans la réalité.

Le plastron 18 comprend une fenêtre 19, par laquelle la face avant 22 de l'unité de coupure 20 est visible. La fenêtre 19 est préférentiellement obturée par un rabat transparent. Le rabat n'est pas représenté.

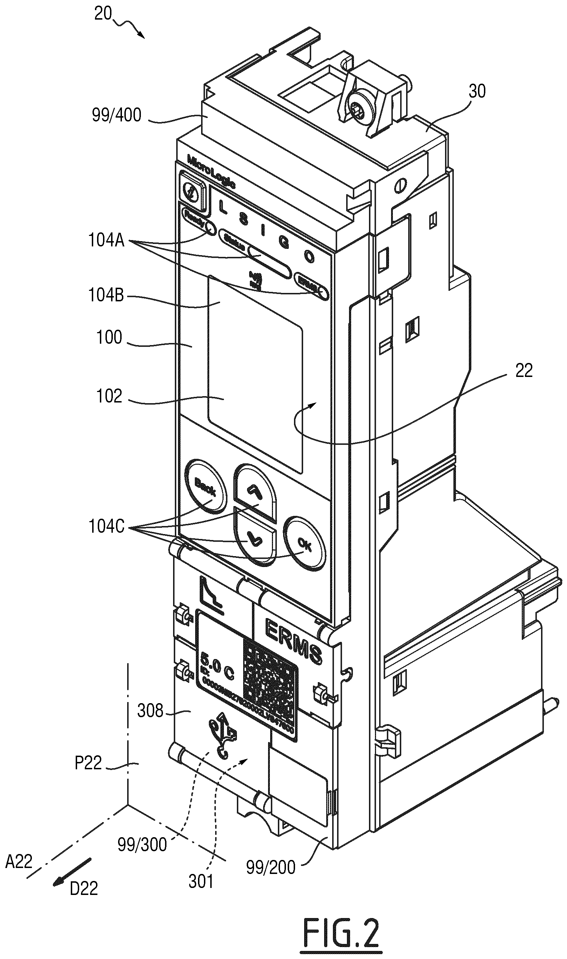

L'unité de contrôle 20 est assemblé à l'unité de coupure 16 de manière réversible. Dans l'exemple des figures 1a) et 1b), l'unité de contrôle 20 est représentée en configuration assemblée à l'unité de coupure 16. L'unité de contrôle 20 est représentée isolément à la figure 2. L'unité de coupure 16 ménage un réceptacle, qui débouche sur une face frontale 14 de l'unité de coupure 16 et dans lequel est reçue l'unité de contrôle 20, de sorte que la face avant 22 de l'unité de contrôle 20 en configuration assemblée est sensiblement alignée avec la face frontale 14 de l'unité de coupure 16, comme notamment illustré à la figure 1 a). Le réceptacle n'est pas représenté.

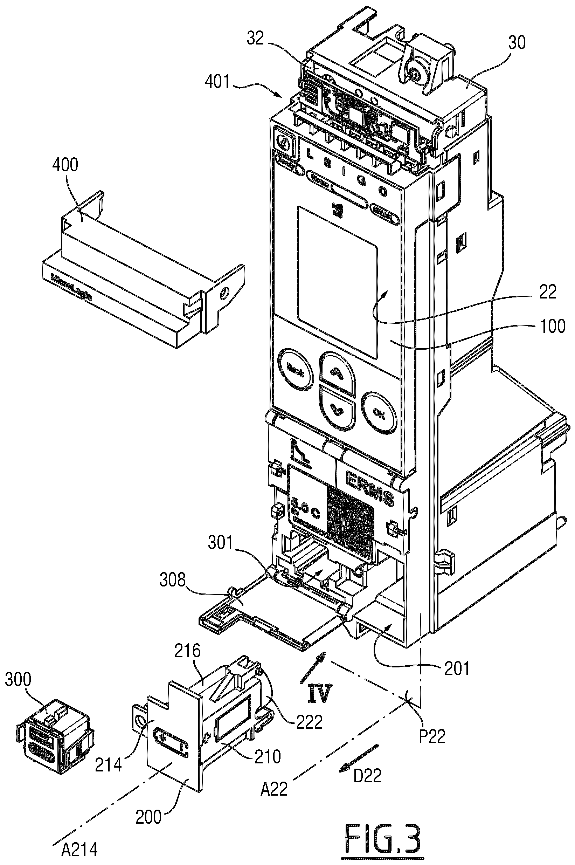

On décrit à présent l'unité de contrôle 20, en référence aux figures 2 et 3.

L'unité de contrôle 20 comprend un boitier 30, qui est réalisé en un matériau isolant et qui forme un volume de réception de divers composants de l'unité de contrôle 20. Le boitier 30 loge en particulier une carte électronique 32, qui est partiellement visible sur la figure 3. La carte électronique 32 comprend un circuit imprimé et plusieurs composants électroniques tels qu'un microprocesseur, etc.

Dans l'exemple illustré, la carte électronique 32 comprend plusieurs portions, qui sont ici reliées les unes aux autres par des bus de communication. Les bus de communication ne sont pas représentés. Optionnellement, une ou plusieurs potions de la carte électronique 32 sont flexibles. Alternativement, la carte électronique 32 inclut plusieurs portions qui ne sont pas reliées les uns aux autres par des bus de communication. Alternativement, la carte électronique est réalisé d'un seul tenant.

Le boitier 30 inclut un sous-ensemble avant 100. Par extension, le sous-ensemble 100 appartient à l'unité de contrôle 20. Le sous-ensemble avant 100 comprend une portion centrale 102, qui est globalement plane, qui présente un côté avant 102A et un côté arrière 102B opposé au côté avant 102A. La portion centrale 102 est ici configurée pour recevoir au moins un élément d'interface homme-machine 104. Le côté avant 102A de la portion centrale 102 est préférentiellement orienté selon la direction avant D22. Une interface homme machine est aussi désignée par son acronyme IHM, ou MHI en anglais. Les éléments d'interface homme machine 104 sont aussi notés simplement « éléments IHM » 104. Dans l'exemple illustré, la portion centrale 102 comprend plusieurs éléments IHM 104. Les éléments IHM 104 incluent ici trois voyants lumineux 104A, une portion transparente 104B, au travers de laquelle un écran peut être observé, et quatre boutons 104C. Ces exemples ne sont pas limitatifs, le type, le nombre et l'agencement des éléments IHM 104 pouvant être changés lors de la conception du sous-ensemble avant 100.

Le sous-ensemble avant 100 est assemblé au reste de l'unité de contrôle 20, en particulier au boitier 30, de manière réversible. Il est ainsi possible de remplacer le sous-ensemble avant 100 en cas de dysfonctionnement. La portion centrale 102 forme ainsi une portion de la face avant 22 de l'unité de contrôle 120.

Le boitier 30 comprend au moins un logement 98, ici trois logements, chaque logement étant ménagé en retrait du plan avant P22 et débouchant sur la face avant 22.

L'unité de contrôle 20 comprend aussi au moins un module fonctionnel 99, ici trois modules fonctionnels 99, chaque logement étant associé à un module fonctionnel respectif. Chaque module fonctionnel 99 est ainsi configuré pour être reçu de manière réversible dans le logement associé, le module fonctionnel 99 considéré étant dans une configuration assemblée.

De préférence, l'unité de contrôle 20 comprend plusieurs modules fonctionnels 99, Dans l'exemple illustré, l'unité de contrôle 20 comprend trois modules fonctionnels 99, qui sont différents les uns des autres et qui incluent un premier module, qui est ici un module prévu pour recevoir une batterie appelé module de batterie 200, un deuxième module, qui est ici un module de connexion 300 filaire, et un troisième module, qui est ici un module de communication 400 sans fil. Chaque module fonctionnel 99 est associé à un logement 98 respectif. Chaque module fonctionnel 99 est configuré pour être reçu de manière réversible dans le logement 98 associé, le module fonctionnel 99 étant alors dans une configuration assemblée. Dans l'exemple illustré, chaque module fonctionnel 99 est configuré pour être inséré dans le logement 98 correspondant selon un mouvement d'insertion, qui est un mouvement de translation parallèle à l'axe de profondeur A22 et orienté selon une direction arrière, c'est-à-dire selon une direction opposée à la direction avant D22.

Sur la figure 3, l'unité de contrôle 20 est représentée en perspective partiellement éclatée, le module de batterie 200, le module de connexion 300 et le module de communication 400 étant représentés éloignés du boitier. Le module de batterie 200 est ainsi associé à un logement de batterie 201, alors que le module de connexion 300 est associé à un logement de connexion 301, et que le module de communication 400 est associé à un logement est agencé en bordure de la face avant 22 et nommé logement frontalier 401. Dans l'exemple illustré, l'unité de contrôle 20 comprend un couvercle 308, qui est articulé par rapport au boitier et qui obture le logement de connexion 301. Le couvercle 308 est représenté dans une position fermée en figure 2, et dans une position ouverte en figure 3.

On s'intéresse ici au module de batterie 200 et au logement de batterie 201.

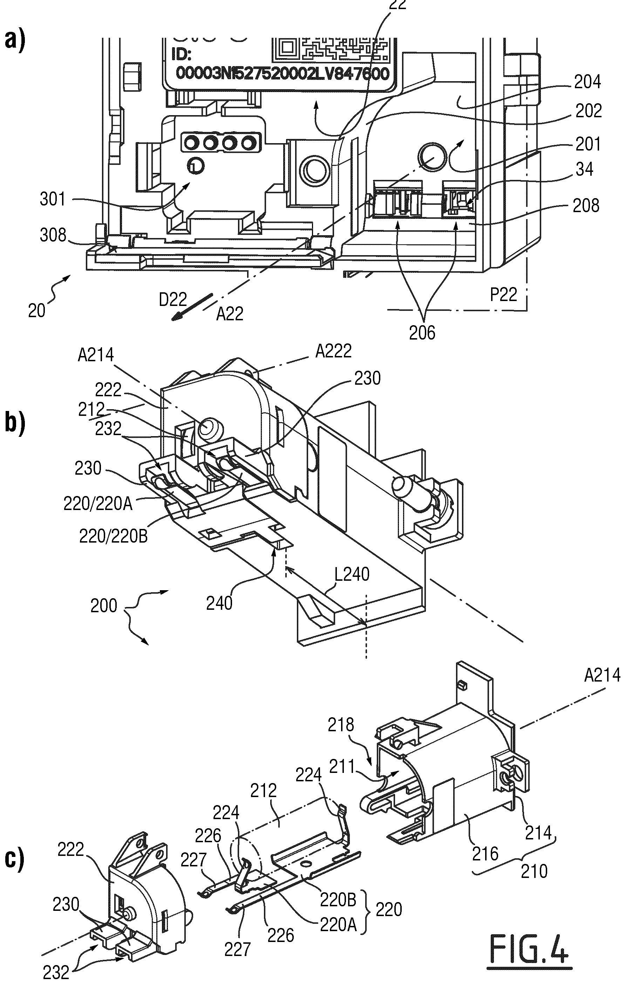

En référence à la figure 4 a), le logement de batterie 201 présente une forme sensiblement cylindrique selon un axe parallèle à l'axe de profondeur A22. Le logement de batterie 201 est ici délimité par une paroi périphérique 202 et par une paroi de fond 204. La paroi de fond 204 délimite le logement de batterie 201 du côté arrière et fait partie du boitier 30. La paroi de fond 204 est ainsi agencée en retrait par rapport au plan avant P22 selon la direction avant D22, et débouche sur le plan avant P22.

Le logement de batterie 201 comprend des ouvertures 206, qui sont ménagées dans la paroi de fond 204 et qui débouchent dans le logement de batterie 201. Une portion de la carte électronique 32 est située du côté arrière de la paroi de fond et comprend une zone de connexion 34, la zone de connexion 34 comprenant au moins une plage de contact 36. Chaque plage de contact 36 comprend un élément conducteur sensiblement plat situé en surface de la carte électronique 32, chaque plage de contact 36 étant propre à être électriquement connectée à un connecteur complémentaire 220 respectif appartenant au module de batterie 200, chaque connecteur complémentaire 220 venant en appui sur la plage de contact 36 correspondante. Avantageusement, les plages de contact 36 font partie du circuit imprimé de la carte électronique 32, autrement dit sont fabriqués en même temps que la carte électronique 32.

Dans l'exemple illustré, la zone de connexion 34 comprend deux plages de contact 36, qui sont situées d'un côté arrière de la paroi de fond 204 et qui sont accessibles depuis le logement de batterie 201 au travers des ouvertures 206. Les deux plages de contact 36, et par première extension la zone de connexion 34, sont ainsi associées au logement de batterie 201.

Chaque ouverture 206 présente un profil avec un cercle inscrit de diamètre strictement inférieur à 4 mm, de préférence inférieur à 3,9 mm, de manière à respecter un indice de protection IP2x, tel que défini dans la norme IEC 60529:2013. On réduit ainsi les risques d'introduction accidentelle d'objets au travers des ouvertures, réduisant les risques d'accident électrique.

Chaque plage de contact 36 de la zone de connexion 34 associée est situé en retrait du plan avant P22 et est éloigné du plan avant P22 d'une distance, mesurée selon l'axe de profondeur A22, supérieure à un premier seuil S1 prédéterminé. Le premier seuil S1 est choisi de sorte qu'une distance dans l'air entre chaque plage de contact 36 et le plan avant P22 est supérieure à une distance d'isolement de classe 2 sous une tension supérieure à 690V, la distance dans l'air et la distance d'isolement de classe 2 étant selon la norme IEC 947-1:2019. De manière schématique, la distance dans l'air entre deux points est le plus court chemin entre ces deux points, tout en contournant les éventuels obstacles. La distance dans l'air est appelée « *clearance distance »* en anglais.

De préférence, le premier seuil S1 est supérieur ou égal à 14 mm. De préférence, une distance dans l'air entre le côté arrière de la paroi de fond 204 et le plan avant P22 est supérieure au premier seuil S1. On garantit ainsi une distance minimale entre tous les éléments électrisés situées du côté arrière de la paroi de fond 204 et la face avant 22 de l'unité de contrôle 20, ce qui améliore la sécurité d'utilisation.

Le module de batterie 200 comprend une enveloppe 210, qui est réalisée en un matériau électriquement isolant et qui délimite une cavité 211. La cavité 211 est configurée pour recevoir une pile électrique 212 présentant deux pôles électriques. La pile électrique 212 est ici une pile cylindrique, dont les deux pôles électriques sont situés sur des faces opposées. La pile 212 est représentée schématiquement en pointillés à la figure 4 c). Les principes de l'invention sont bien entendu transposables à d'autres types de piles.

L'enveloppe 210 comprend une paroi proximale 214, qui est globalement orthogonale à un axe principal A214, et une paroi périphérique 216, qui s'étend en saillie depuis la paroi proximale et qui présente un contour continu autour de l'axe principal A214, la paroi proximale 214 et la paroi périphérique 216 délimitant ensemble la cavité 211. Une fois le module de batterie 200 reçu dans le logement de batterie 201 en configuration assemblée, l'axe principal A214 est sensiblement parallèle à l'axe de profondeur A22. La cavité 211 débouche de l'enveloppe 210 par une embouchure distale 218, qui est situé à l'opposé de la paroi proximale 214 selon l'axe principal A214.

Lorsque le module de batterie 200 est reçu dans le logement de batterie 201, l'enveloppe 210 obture au moins en partie le logement de batterie 201, de sorte qu'une distance de ligne de fuite chaque plage de contact 36 et le plan avant P22 est supérieure à une distance d'isolement de classe 2 sous une tension supérieure à 690V, la distance de ligne de fuite étant selon la norme IEC 947-1:2019.

Lorsque le module de batterie 200 est en configuration assemblée, l'embouchure distale 218 est avantageusement orientée vers la zone de connexion 34 correspondante, la cavité 211 masquant, vers l'avant, les plages de contact 36, de sorte qu'une distance de lignes de fuites depuis chaque plage électrique 36 jusqu'au plan avant P22 est supérieure à un deuxième seuil S2 prédéterminé, le deuxième seuil S2 étant supérieur au premier seuil S1. De manière simplifiée, la distance de ligne de fuite entre deux points est la distance minimale entre ces deux points en parcourant la surface du matériau, les intervalles dans l'air inférieurs à 1,5 mm pouvant néanmoins être « sautés », c'est-à-dire traversés dans l'air. La distance de ligne de fuite est appelée « *creepage distance »* en anglais. Avantageusement, le deuxième seuil S2 est supérieur à une distance d'isolement de classe 2 tel que défini dans la norme IEC 947-1:2019. De préférence, le deuxième seuil est égal à 20 mm.

Le module de batterie 200 comprend, outre l'enveloppe 210 isolante, au moins un contact complémentaire 220, qui est réalisé en métal, qui est partiellement reçu dans la cavité 211 et qui dépasse à l'extérieur de l'enveloppe 210 par l'embouchure distale 218. Chaque contact complémentaire 220 étant configuré pour être connecté, de manière réversible, à une plage de contact 36 respective du logement correspondant lorsque le premier module 200 est en configuration assemblée. Ainsi, la présence des contacts électriques, et plus généralement de tout autre dispositif électrique ou électronique reçu dans la cavité, n'a pas d'impact sur le niveau de protection en termes de distance dans l'air ou de lignes de fuite.

Dans l'exemple illustré, le module de batterie 200 comprend deux contacts complémentaires 220, qui relient les pôles de la pile 212 aux plages de contact 36 associées au premier logement 201 de batterie. Avantageusement, le module de batterie 200 comprend aussi un couvercle 222, qui est mobile par rapport à l'enveloppe 210 entre une position ouverte et une position fermée, dans laquelle le couvercle 222 obture au moins en partie la cavité 211, le couvercle 222 en position fermée étant configuré pour maintenir la pile électrique 212 dans la cavité, le module de batterie 200 étant alors dans une configuration fermée.

Les contacts complémentaires 220 incluent ici un premier élément conducteur 220A et un deuxième élément conducteur 220B, qui sont formés par découpage et pliage d'une feuille métallique. Le premier élément conducteur 220A et le deuxième élément conducteur 220B sont visibles à la figure 4 b).

Le premier élément conducteur 220A est ici porté par le couvercle 222, tandis que le deuxième élément conducteur 220B est porté par l'enveloppe 210.

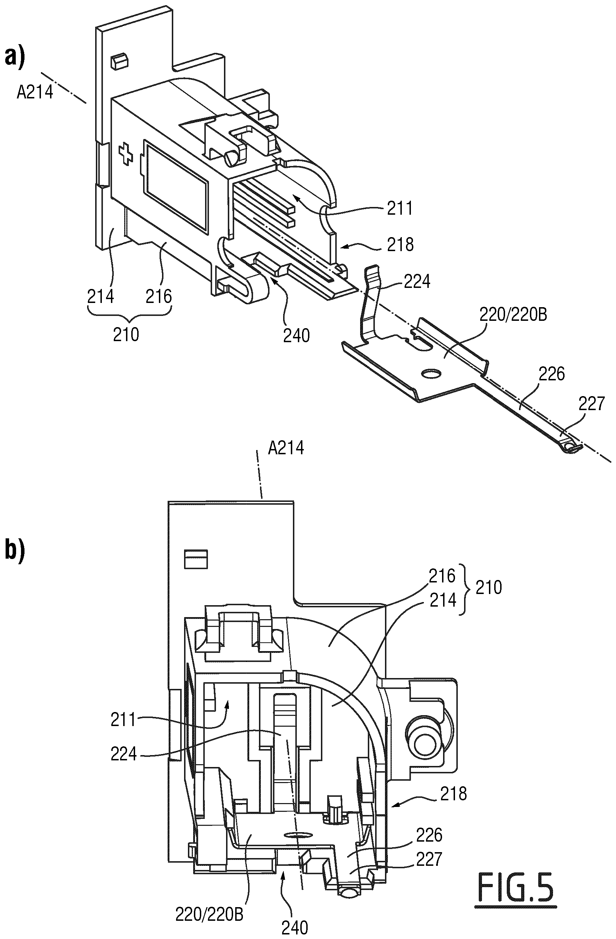

Les deux éléments conducteurs 220A et 220B comprennent chacun une patte d'entrée 224, qui est configurée pour être connectée à un pôle respectif de la pile 212, et une patte de sortie 226, qui est configurée pour être connectée à une plage de contact 36 électrique respective du logement de batterie lorsque le module de batterie est en configuration fermée et est reçu dans le logement correspondant, dans une configuration assemblée du module de batterie à l'unité de contrôle, comme représenté en figure 5 b). La patte de sortie 226 comprend ici une portion terminale 227 présente ici une forme de lame rectiligne. Lorsque le module de batterie 200 est en configuration fermée, les portions terminales 227 sont géométriquement portées par un même plan de connexion P227, qui est parallèle à l'axe principal A214 et parallèle à l'axe transversal T214.

Lorsque le module de batterie 200 est en configuration fermée, les deux portions terminales 227 débouchent de la cavité 211 par des passages 228, qui sont ménagés dans le couvercle 222. Dans l'exemple illustré, les deux portions terminales 227 s'étendent parallèlement à l'axe principal A214, les deux portions terminales 227 étant décalées l'une par rapport à l'autre selon un axe transversal T214, qui est orthogonal à l'axe principal A214. Ainsi les extrémités des portions terminales 227 sont alignées, l'une par rapport à l'autre, selon l'axe transversal T214.

Chaque portion terminale 227 se termine avantageusement par un renflement terminal 229. Chaque renflement terminal 229 est ménagé en saillie par rapport au reste de la portion terminale 227 correspondante et s'étend selon la direction de connexion D232. Chaque renflement terminal 229 est configuré pour prendre appui sur la plage de contact 36 associée. Ainsi les renflements terminaux 229 sont alignés, l'un par rapport à l'autre, selon l'axe transversal T214. La portion terminale 227 de chaque patte de sortie 226 est avantageusement déformable élastiquement, de manière à assurer une pression de contact suffisante entre le renflement terminal 229 et la plage de contact 36 correspondante.

Le couvercle 222 comprend deux extensions 230, chaque extension 230 étant associée à un passage 228 respectif et s'étendant en saillie depuis le reste du couvercle 222. Chaque extension 230 ménage un conduit 232, qui s'étend depuis le passage 228 associé parallèlement à l'axe principal A214 lorsque le module de batterie 200 est en configuration fermée, chaque portion terminale 227 débouchant par le passage 228 considéré étant au moins partiellement reçue dans le conduit 232 associé.

Les deux conduits 232 sont ouverts selon même direction de connexion D232, la direction de connexion D232 étant orthogonale au plan de connexion P227, les deux conduits 232 étant ouverts d'un même côté du plan de connexion P227, de manière à autoriser une connexion électrique sur chacune des portions terminales 227 selon la direction de connexion D232. Chaque extension 230 protège ainsi la portion terminale 227 lorsque le module de batterie 200 est retiré de l'unité de contrôle 20, par exemple pour éviter de plier les portions terminales 227 par inadvertance.

Chaque extension 230 présente un ergot 234, qui s'étend en saillie, depuis le reste de l'extension 230, au sein du conduit 232 correspondant. Chaque ergot 234 est ainsi intercalé entre l'extension 230 et la portion terminale 227 correspondante selon la direction de connexion D232. Les ergots 234 sont alignés, l'un par rapport à l'autre, selon l'axe transversal T214. Chaque ergot 234 prend ainsi appui contre la portion terminale 227 correspondante. Ainsi, pour chaque portion terminale 227, une longueur entre l'extrémité libre de cette portion terminale 227 et une zone d'appui de l'ergot 234 correspondant sur la portion terminale 227 est sensiblement la même. Alors que les portions terminales 227 des deux lames de sortie 226 présentent une longueur différente l'une de l'autre, les ergots 234 font qu'une force de pression de chaque portion terminale 227 sur la plage de contact 36 correspondante est sensiblement la même, offrant ainsi un bon contact électrique, de manière répétable après chaque assemblage du module de batterie 200 au reste de l'unité de contrôle 20.

Avantageusement, chaque extension 232 présente une protubérance terminale 239, qui est ménagée en saillie par rapport au reste de l'extension 232 correspondante selon la direction de connexion D232, la protubérance terminale 239 étant aligné, selon l'axe principal A214, avec le renflement terminal 229 correspondant. Chaque protubérance terminale 239 protège ainsi le renflement terminal 229 correspondant des appuis intempestifs.

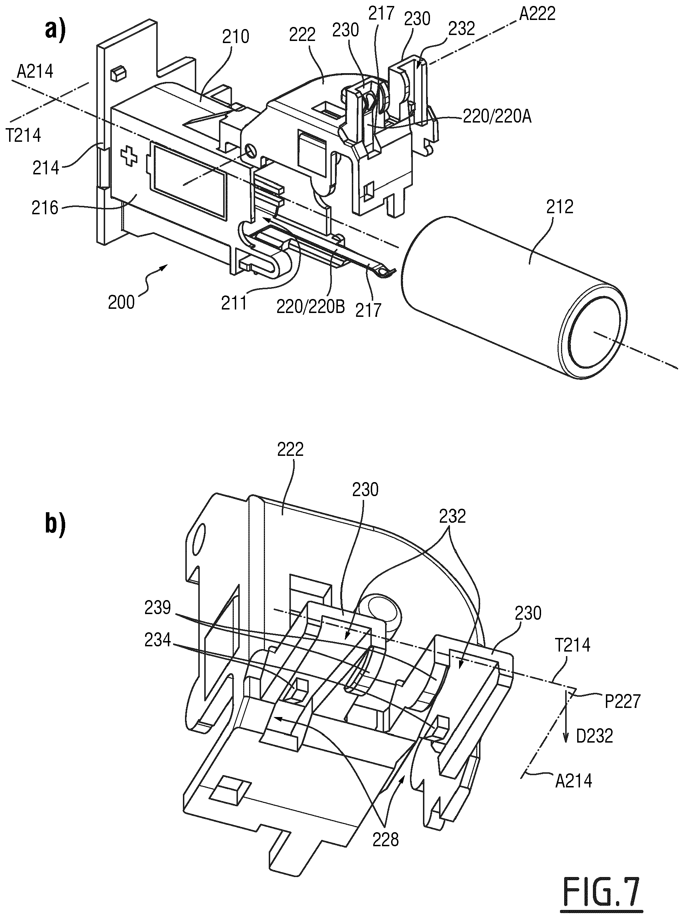

Comme illustré à la figure 7 a), le couvercle 222 est avantageusement articulé en rotation par rapport à l'enveloppe 210 autour d'un axe de charnière A222, entre la position ouverte et la position fermée. L'axe de charnière A222 est ici un axe parallèle à l'axe transversal T214. Le couvercle 222 est ainsi considéré comme imperdable. Lors du montage du module de batterie 200, l'opérateur insère la pile 212 dans la cavité 211 de l'enveloppe 201, bien entendu en respectant le sens des pôles si nécessaires, puis déplace le couvercle 222 en position fermée, assurant le contact entre chaque patte d'entrée et le pôle correspondant de la pile 212.

La paroi proximale 214 et la paroi périphérique 216 forment ensemble une portion continue de l'enveloppe 210, la portion continue s'étendant jusqu'à une distance minimale de la paroi proximale 214, la distance minimale étant mesurée selon l'axe principal et étant égale à 14 mm. Autrement dit, la paroi proximale 214 et la paroi périphérique 216 ne présentent aucune ouverture, qui soit situé à moins de 14 mm selon l'axe principal A214, reliant la cavité 211 à l'extérieur de l'enveloppe.

Dans l'exemple illustré, l'enveloppe 210 présente une encoche 240, qui est ménagée dans la paroi périphérique 216 et qui délimite une portion de l'embouchure distale 218, comme représenté en figure 4 b). L'encoche 240 sert ici lors du montage du deuxième élément conducteur 220B dans l'enveloppe 210. Un fond de l'encoche forme ici l'endroit, par lequel la cavité 211 débouche de l'enveloppe 210, le plus proche de la paroi proximale 214. On définit une distance L240, mesurée parallèlement à l'axe principal A214, entre le fond de l'encoche 240 et la paroi proximale 214. La distance L240 est supérieure à 14 mm. La distance L240 est ici égale à 20,8 mm.

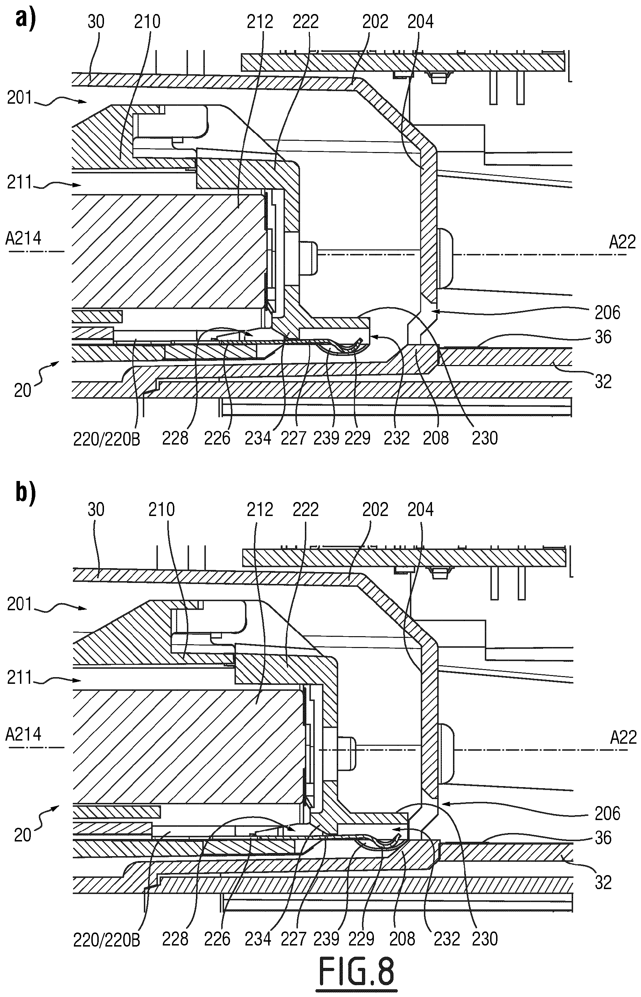

On décrit à présent une séquence d'assemblage du module de batterie 200 au reste de l'unité de contrôle 20, en référence aux figures 8 à 10.

À la figure 8 a), le module de batterie 200 est inséré dans le logement de batterie 201, l'axe principal A214 étant sensiblement aligné avec l'axe de profondeur A22. Le mouvement d'insertion est sensiblement un mouvement de translation du module de batterie 200 vers l'arrière de l'unité de contrôle 20.

À mesure que le mouvement d'insertion du module de batterie 200 se poursuit, la protubérance terminale 239 vient en contact d'une portion du contour de l'ouverture 206. Plus précisément, le boitier 30 comprend avantageusement une rampe 208, qui ménage une surface inclinée faisant un raccord entre la paroi périphérique 202 et l'ouverture 206 et qui forme, par extension, une portion du contour de l'ouverture 206. L'unité de contrôle 20 est alors dans la configuration de la figure 8 b). On comprend que la protubérance terminale 239 empêche le contact entre la portion terminale 229 et le boitier 30. On réduit ainsi les risques d'accrochage des portions terminales 227 sur le boitier 20.

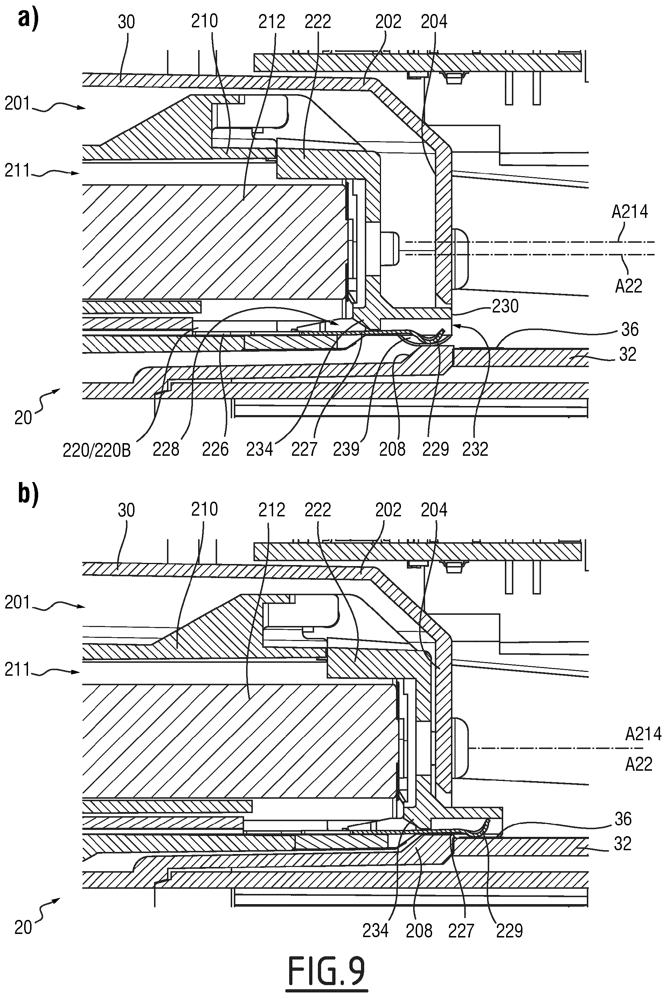

Alors que le mouvement d'insertion du module de batterie 200 se poursuit, chaque protubérance terminale 239 prend appui sur le contour de l'ouverture 206 correspondante, notamment sur la rampe 208 de manière à guider chaque extension 230 et la portion terminale 227 associée lors du franchissement de l'ouverture 206, empêchant ainsi que le renflement terminal 229 de la portion terminale 227 considérée et/ou l'extension 230 ne heurte le contour de l'ouverture 206. L'unité de contrôle 20 est alors dans la configuration de la figure 9 a).

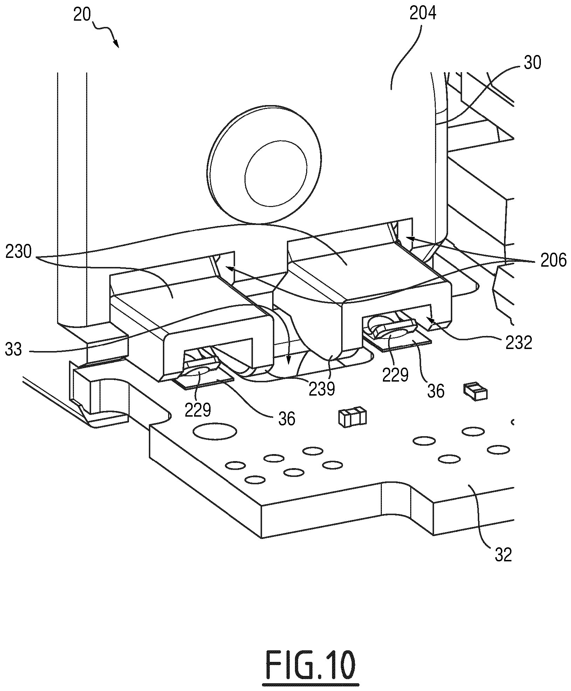

Alors que le mouvement d'insertion du module de batterie 200 se poursuit, chaque protubérance terminale 239 est à présent du côté arrière de la paroi de fond 204 de logement de batterie 201, comme illustré à la figure 9 b) et à la figure 10. La carte électronique 32 présente un évidement 33, dans lequel sont reçu les protubérances terminales 239. Chaque renflement terminal 229 est en appui contre la plage de contact 36 correspondante. Chaque portion terminale 227 est pincée entre l'ergot 234 correspondant et le contour de l'ouverture 206 correspondante, la portion terminale étant déformée élastiquement pour assurer une force de contact satisfaisante entre le renflement terminal 229 et la plage de contact 36 correspondante.

Les modes de réalisation et les variantes mentionnées ci-dessus peuvent être combinés entre eux pour générer de nouveaux modes de réalisation de l'invention.

## Revendications

1. Module de batterie (200) pour une unité de contrôle (20) d'un disjoncteur électrique, le module de batterie (200) étant configuré pour être inséré dans un logement (201) de batterie associé de l'unité de contrôle (20), le logement (201) débouchant sur une face avant (22) de l'unité de contrôle (20) et présentant une forme allongée selon un axe de profondeur (A22) orthogonal à la face avant (22), l'unité de contrôle (20) comprenant deux plages de contact (36) électrique agencées dans un fond du logement (201), dans lequel :
- le module de batterie (200) comprend :
• une enveloppe (210), qui comprend une paroi proximale (214), qui est globalement orthogonale à un axe principal (A214), et une paroi périphérique (216), qui s'étend en saillie depuis la paroi proximale (214) et qui présente un contour continu autour de l'axe principal (A214), la paroi proximale (214) et la paroi périphérique (216) délimitant ensemble une cavité (211) de l'enveloppe (210), la cavité (211) étant configurée pour recevoir une pile (212) électrique présentant deux pôles électriques, la cavité (211) débouchant de l'enveloppe (210) par une embouchure distale (218), qui est située à l'opposé de la paroi proximale (214) selon l'axe principal (A214),
• un couvercle (222), qui est mobile par rapport à l'enveloppe (210) entre une position ouverte et une position fermée, dans laquelle le couvercle (222) obture au moins en partie la cavité (211), le couvercle (222) en position fermée étant configuré pour maintenir la pile (212) électrique dans la cavité (211), le module de batterie (200) étant alors dans une configuration fermée,
• deux éléments conducteurs (220A, 220B), qui comprennent chacun une patte d'entrée (224), qui est configurée pour être connectée à un pôle respectif de la pile (212), et une patte de sortie (226), qui est configurée pour être connectée à une plage de contact (36) électrique respective de l'unité de contrôle (20) lorsque le module de batterie (200) est en configuration fermée et est reçu dans le logement (201) correspondant, dans une configuration assemblée du module de batterie (200) à l'unité de contrôle (20),
- la paroi proximale (214) et la paroi périphérique (216) forment ensemble une portion continue de l'enveloppe (210), la portion continue s'étendant jusqu'à une distance minimale (L240) de la paroi proximale (214), la distance minimale étant mesurée selon l'axe principal (A214) et étant supérieure ou égale à 14 mm.

2. Module de batterie (200) selon la revendication 1, dans lequel :
- le couvercle (222) est articulé en rotation, par rapport à l'enveloppe (210), autour d'un axe de charnière (A222), entre la position ouverte et la position fermée.

3. Module de batterie (200) selon l'une quelconque des revendications 1 ou 2, dans lequel :
- le module de batterie est configuré pour recevoir une pile (212) présentant deux pôles situés sur des faces opposées de la pile (212),
- les deux éléments conducteurs (220A, 220B) incluent un premier élément (220A), qui est porté par le couvercle (222), et un deuxième élément (220B), qui est porté par l'enveloppe (210),
- les pattes de sortie (226) comprennent chacune une portion terminale (227) présentant globalement une forme de lame rectiligne,
- lorsque le module de batterie (200) est en configuration fermée, les deux portions terminales (227) débouchent de la cavité (211) par des passages (218), qui sont ménagés dans le couvercle (222), les deux portions terminales (227) s'étendant parallèlement à l'axe principal (A214) et étant décalées l'une par rapport à l'autre selon un axe transversal (T214), qui est orthogonal à l'axe principal (A214).

4. Module de batterie (200) selon la revendication 3, dans lequel :
- lorsque le module de batterie (200) est en configuration fermée, les portions terminales (227) sont géométriquement portées par un même plan de connexion (P227), qui est parallèle à l'axe principal (A214) et parallèle à l'axe transversal,
- le couvercle (222) comprend deux extensions (230), chaque extension étant associée à un passage (218) respectif,
- chaque extension (230) ménage un conduit (232), qui s'étend depuis le passage (218) associé parallèlement à l'axe principal (A214) lorsque le module de batterie (200) est en configuration fermée, la portion terminale (227) débouchant par le passage (218) considéré étant au moins partiellement reçue dans le conduit (232) associé,
- les deux conduits (232) sont ouverts selon une même direction de connexion (D232), la direction de connexion (232) étant orthogonale au plan de connexion (P227), de manière à autoriser une connexion électrique sur chacune des portions terminales (227) selon la direction de connexion.

5. Module de batterie (200) selon la revendication 4, dans lequel :
- chaque portion terminale (227) comprend une extrémité, les extrémité des portions terminales étant alignées, l'une par rapport à l'autre, selon l'axe transversal (T214),
- chaque extension (230) présente un ergot (234), qui s'étend en saillie, depuis le reste de l'extension, au sein du conduit (232) correspondant, chaque ergot (234) étant intercalé entre l'extension (230) et la portion terminale (227) correspondante selon la direction de connexion (D232), chaque ergot (234) prenant appui contre la portion terminale (227) correspondante,
- les ergots (234) sont alignés selon l'axe transversal (T214).

6. Module de batterie (200) selon l'une quelconque des revendications 4 ou 5, dans lequel :
- chaque portion terminale (227) comprend une extrémité présentant un renflement terminal (229), qui est ménagé en saillie par rapport au reste de la portion terminale (227) correspondante et s'étend selon la direction de connexion (D232), chaque renflement terminal (229) étant configuré pour prendre appui sur la plage de contact (36) associée,
- chaque extension (230) présente une protubérance terminale (239), qui est ménagée en saillie par rapport au reste de l'extension (230) correspondante selon la direction de connexion (D232), chaque protubérance terminale (239) étant alignée, selon l'axe principal (A214), avec le renflement terminal (229) de la portion terminale (227) correspondante.

7. Unité de contrôle (20) pour un disjoncteur électrique, l'unité de contrôle (20) comprenant :
- un exemplaire du module de batterie (200) selon l'une quelconque des revendications 1 à 6, et
- un boitier (30), qui est réalisé en un matériau isolant et dans lequel est ménagé un logement (201) de réception du module de batterie (200), le logement (201) étant ménagé en retrait du plan avant (P22) et débouchant sur la face avant (22) selon l'axe de profondeur (A22),
dans laquelle :
- l'unité de contrôle (20) comprend deux plages de contact (36), qui sont agencées dans un fond du logement (201),
- les deux pattes de sortie (216) sont configurées pour être électriquement connectées à une plage de contact (36) respective lorsque l'unité de contrôle (20) est dans la configuration assemblée.

8. Unité de contrôle (20) selon la revendication 7, dans laquelle :
- le module de batterie (200) est selon l'une quelconque des revendications 4 à 6,
- le logement (201) comprend une paroi de fond (204), dans laquelle sont ménagées des ouvertures (206), les plages de contact (36) étant situées d'un côté opposé au logement (201) par rapport à la paroi de fond (204),
- lorsque l'unité de contrôle (20) est dans la configuration assemblée, chaque extension (230) et la portion terminale (207) associée traversent l'ouverture (206) correspondante, la portion terminale (227) étant en appui contre la plage de contact (36) correspondante.

9. Unité de contrôle (20) selon la revendication 8, dans laquelle :
- les ouvertures (206) présentent un indice de protection IP2x tel que défini dans la norme IEC 60529:2013.

10. Unité de contrôle (20) selon l'une quelconque des revendications 8 ou 9, dans laquelle :
- le module de batterie (200) est selon la revendication 6,
- chaque protubérance terminale (239) est configuré pour, au cours d'un mouvement d'insertion du module de batterie (200) dans le logement (201) de batterie, prendre appui sur un contour (208) de l'ouverture correspondante, de manière à guider chaque extension (230) et la portion terminale (227) associée lors du franchissement de l'ouverture (206) et à empêcher que le renflement terminal (229) de la portion terminale (227) considérée ne heurte le contour de l'ouverture (206).

11. Disjoncteur électrique (10), comprenant :
- une unité de coupure (16), comprenant au moins un actionneur et un dispositif de coupure déclenchable au moyen l'actionneur,
- un exemplaire de l'unité de contrôle (20) selon l'une quelconque des revendications 7 à 10,
dans lequel :
- l'unité de coupure (20) ménage un réceptacle, qui débouche sur une face frontale (14) de l'unité de coupure,
- l'unité de contrôle (20) est reçue dans le réceptacle de l'unité de coupure (16) dans une configuration assemblée du disjoncteur électrique (10), où l'unité de contrôle (20) est configurée pour contrôler l'actionneur, de manière à déclencher le dispositif de coupure.
